# EUROPEAN PATENT APPLICATION

(11) **EP 3 819 192 A1**
(43) Date of publication of application: **12.05.2021**
(21) Application number: 19831263.9
(22) Date of filing: 01.07.2019
(51) Int. Cl.: B62D 5/04, F16H 1/20

(54) **STEERING SYSTEM**

(30) Priority: 02.07.2018 JP 2018126295; 22.02.2019 JP 2019030062
(71) Applicant: NSK LTD., Shinagawa-Ku Tokyo 141-8560 (JP)
(72) Inventor: HIKIDA, Masafumi, Fujisawa-shi, Kanagawa 251-8501 (JP); MATSUDA, Yasuyuki, Fujisawa-shi, Kanagawa 251-8501 (JP); MORITA, Ryuho, Fujisawa-shi, Kanagawa 251-8501 (JP)
(74) Representative: Grünecker Patent- und Rechtsanwälte PartG mbB
(86) International application number: PCT/JP2019/026172
(87) International publication number: WO 2020/009075

(57) **Abstract**

Provided is a structure that together with being compact, allows a vehicle to be steered even when power is not supplied to a steering device and a turning device.

A reduction mechanism 28 for reducing and transmitting the motive power of the reaction force applying motor 6 to a steering shaft 5 is configured by a shaft-side teeth portion 9 of the steering shaft 5, two-stage gears 7a, 7b having a first teeth portion 26 and a second teeth portion 27, and a motor-side teeth portion 19 of the reaction force applying motor 6. A torque transmission mechanism 4 connects the steering shaft 5 and an input shaft 51 of a steering gear unit 49, and is capable of switching between a transmitting mode of mechanically transmitting torque between the steering shaft 5 and the input shaft 51 and a non-transmitting mode.

## Description

### [Technical Field]

The present invention relates to a steer-by-wire type steering system in which a steering device having a steering wheel and a turning device for imparting a steering angle to a pair of steered wheels are electrically connected.

### [Background Art]

The steer-by-wire type steering system includes a steering device having a steering wheel and a turning device for imparting a steering angle to a pair of steered wheels electrically connected to the steering device. The steering device further includes a sensor for measuring the amount of operation of the steering wheel, and applies a steering angle to the pair of steered wheels by driving an actuator of the turning device based on an output signal from the sensor.

The steer-by-wire type steering system has an advantage in that the steering angle of the steered wheels with respect to the operating amount of the steering wheel may be adjusted according to the traveling speed or the like of the vehicle.

Incidentally, the steer-by-wire type steering system is configured so as to apply an operating reaction force to the steering wheel by an electric motor.

The steering system described in JP 2007-055453A is configured so as to directly apply the power of an electric motor to the steering shaft without using a reduction mechanism or the like. In such a direct drive type structure, a problem occurs in that the electric motor becomes large.

On the other hand, the steering system described in JP 2009-073334A is configured such that the output shafts of a pair of electric motors are arranged in parallel with the steering shaft, and so as to apply the power of each of the electric motors to the steering shaft via two-stage gear. More specifically, the large-diameter teeth portions of the two-stage gears engage with the motor-side teeth portion arranged on the output shaft of the electric motor, and the small-diameter side teeth portions thereof engage with the shaft-side teeth portion arranged on the steering shaft.

### [Citation List]

### [Patent Literature]

[Patent Literature 1] JP 2007-055453A
[Patent Literature 2] JP 2009-073334A

### [Summary of Invention]

### [Technical Problem]

In the steering system described in JP 2009-073334A, the output shafts of the pair of electric motors are arranged parallel to the steering shaft, so a problem occurs in that electric motors with a large volume will be placed around the steering shaft and a reaction force applying device that applies the operating reaction force to the steering wheel becomes larger as a whole.

Moreover, in the steering system described in JP 2009-073334, the steering device and the turning device are not mechanically connected, so when a failure such as a broken harness or the like occurs and electric power cannot be supplied to the steering device or turning device, it may not be possible to steer the vehicle.

In view of the above circumstances, an object of the present invention is to achieve a structure of a steering system that can be configured to be compact and capable of steering a vehicle even when power cannot be supplied to a steering device or a turning device.

### [Solution to Problem]

The steering system of the present invention includes a steering device, a turning device, and a torque transmission mechanism.

The steering device includes a steering shaft, a reaction force applying motor, at least one two-stage gear, and a measuring device.

The steering shaft has a shaft-side teeth portion and a support portion that supports a steering wheel.

The reaction force applying motor has an output shaft that is coaxially arranged with the steering shaft and a motor-side teeth portion arranged at a tip end portion of the output shaft

The at least one two-stage gear has an intermediate shaft arranged parallel to the steering shaft, a first teeth portion arranged on the intermediate shaft and that engages with the shaft-side teeth portion, and a second teeth portion arranged on a portion of the intermediate shaft that is closer to the electric motor side than the first teeth portion and that engages with the motor-side teeth portion.

The measuring device measures an operation amount of the steering wheel.

The turning device includes a steering gear unit and a turning motor.

The steering gear unit has an input shaft, and a linear motion shaft that displaces in its own axial direction as the input shaft rotates.

The turning motor, based on an output signal from the measuring device, rotationally drives the input shaft directly or via a speed reducer.

A torque transmission mechanism connects the steering shaft and the input shaft so as to be able to switch between a transmitting mode of mechanically transmitting torque between the steering shaft and the input shaft, and a non-transmitting mode.

The at least one two-stage gear is preferably configured by a plurality of two-stage gears, and more preferably is configured by three two-stage gears. However, the at least one two-stage gear may be configured by two or four or more two-stage gears, and may also be configured by one two-stage gear.

Preferably the torque transmission mechanism, in a case where power supplied to at least one of the steering device and the turning device is stopped, switches to a transmitting mode of mechanically transmitting torque between the steering shaft and the input shaft, and in a case where power is supplied to both the steering device and the turning device, switches to a non-transmitting mode that does not mechanically transmit torque between the steering shaft and the input shaft.

In the steering system according to the present invention, the output shaft may be configured by a hollow shaft supported around the steering shaft so as to be able to freely rotate relate to the steering shaft. In the steering system in this case, the torque transmission mechanism further includes an intermediate shaft that is connected to the input shaft so as to be able to transmit torque, and a clutch that is arranged between the steering shaft and the intermediate shaft in a direction of mechanical transmission of torque between the steering shaft and the input shaft.

Alternatively, in the steering system according to the present invention, the torque transmission mechanism may also further include an intermediate gear that engages with the shaft-side teeth portion, a transmission gear that engages with the intermediate gear, an intermediate shaft that is connected to the input shaft so as to be able to transmit torque, and a clutch that is arranged between the transmission gear and the intermediate shaft in a direction of mechanical transmission of torque between the steering shaft and the input shaft. In this case, preferably the transmission gear has the same number of teeth as the shaft-side teeth portion.

The steering system of the present invention may also further include a biasing mechanism that presses the at least one two-stage gear inward in the radial direction of the steering shaft. Note that in a case where the at least one two-stage gear is configured by the plurality of two-stage gears, the biasing mechanism may be provided on at least one two-stage gear of the plurality of two-stage gears.

The intermediate shaft may be a torsion bar; and in a state where torque is not transmitted by the at least one two-stage gear, the intermediate shaft may exert an elastic force in the twisting direction. In this case, the at least one two-stage gear further has a stopper mechanism for preventing the first teeth portion and the second teeth portion from rotating relative to each other by a specified angle or more. Note that, in a case where the at least one two-stage gear is configured by the plurality of two-stage gears, the intermediate shaft of at least one two-stage gear of the plurality of two-stage gears is a torsion bar; and in a state where torque is not transmitted by the at least one two-stage gear, the intermediate shaft exerts an elastic force in the twisting direction.

In the steering system of the present invention, the input shaft may be configured by a pinion shaft having pinion teeth; and the linear motion shaft may be configured by a rack shaft having rack teeth that engage with the pinion teeth.

Alternatively, in the steering system of the present invention, the linear motion shaft may be configured by a ball screw shaft having an inner-diameter-side ball screw groove on the outer circumferential surface. In this case, the steering gear unit may further include a ball nut that rotates as the input shaft rotates, and has an outer-diameter-side ball screw groove on the inner circumferential surface, and a plurality of balls arranged between the inner-diameter-side ball screw groove and the outer-diameter-side-ball screw groove.

Alternatively, in the steering system of the present invention, the linear motion shaft may be configured by a screw shaft having a spiral shaped male screw groove on the outer circumferential surface. In this case, the steering gear unit further includes a nut that rotates as the input shaft rotates, and has a spiral shaped female screw groove on the inner circumferential surface; and a plurality of planetary rollers arranged so as to be able to freely revolve about the central axis of the linear motion shaft and to be able to freely rotate about its own central axis that is arranged parallel to the central axis of the linear motion shaft, each planetary roller having a roller screw groove on the outer circumferential surface that engages with the male screw groove and the female screw groove.

### [Advantageous Effect of Invention]

With the steering system of the present invention, the output shaft of the electric motor is coaxially arranged with the steering shaft, so together with being compact, allows a vehicle to be steered even when power is not supplied to a steering device and a turning device.

### [Brief Description of the Drawings]

FIG. 1 is a schematic view illustrating a steering system according to a first example of an embodiment of the present invention.
FIG. 2 is a perspective view illustrating a steering device and a clutch of the first example.
FIG. 3 is a plan view illustrating a steering device and a clutch of the first example.
FIG. 4 is a cross-sectional view taken along the line A-A of FIG. 3.
FIG. 5 is an enlarged view of part B of FIG. 4.
FIG. 6 is a perspective view illustrating a reduction mechanism of the first example.
FIG. 7 is an end view as seen from the left side of FIG. 6.
FIG. 8 is a perspective view illustrating a two-stage gear in a steering system according to a second example of an embodiment of the present invention.
FIG. 9 is a cross-sectional view illustrating the two-stage gear of the second example.
FIG. 10 is a cross-sectional view taken along line C-C of FIG. 9.
FIG. 11 is a schematic view illustrating a steering system according to a third example of an embodiment of the present invention.
FIG. 12 is a perspective view illustrating a steering device and a clutch of the third example.
FIG. 13 is an end view as seen from the right side of FIG. 12.
FIG. 14 is a cross-sectional view taken along the line D-O-D of FIG. 13.
FIG. 15 is a schematic view illustrating a steering system according to a fourth example of an embodiment of the present invention.
FIG. 16 is a schematic view illustrating a steering system according to a fifth example of an embodiment of the present invention.

### [Description of Embodiments]

### [First Example]

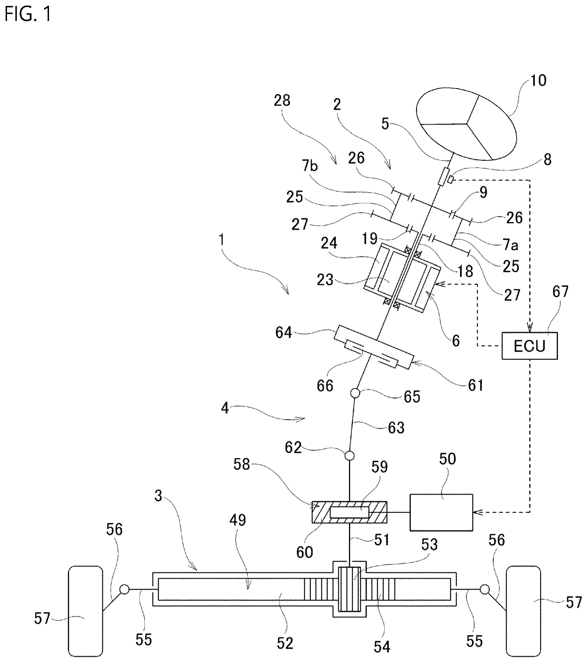

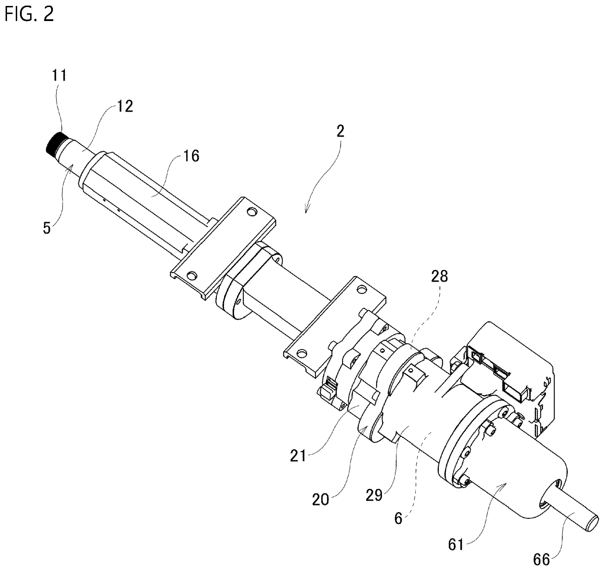

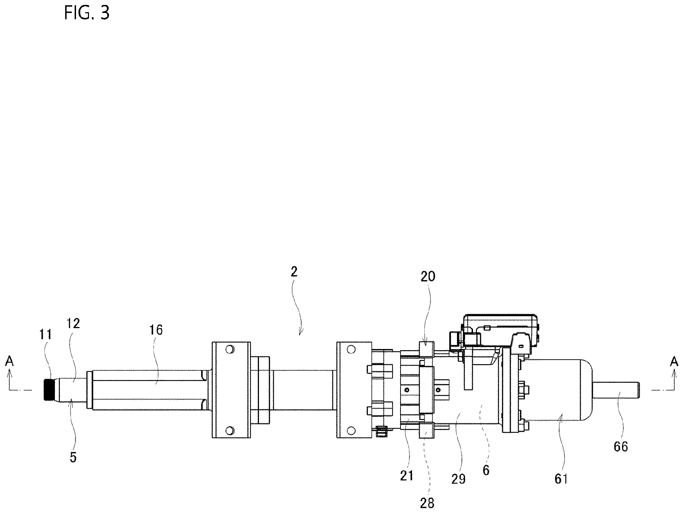

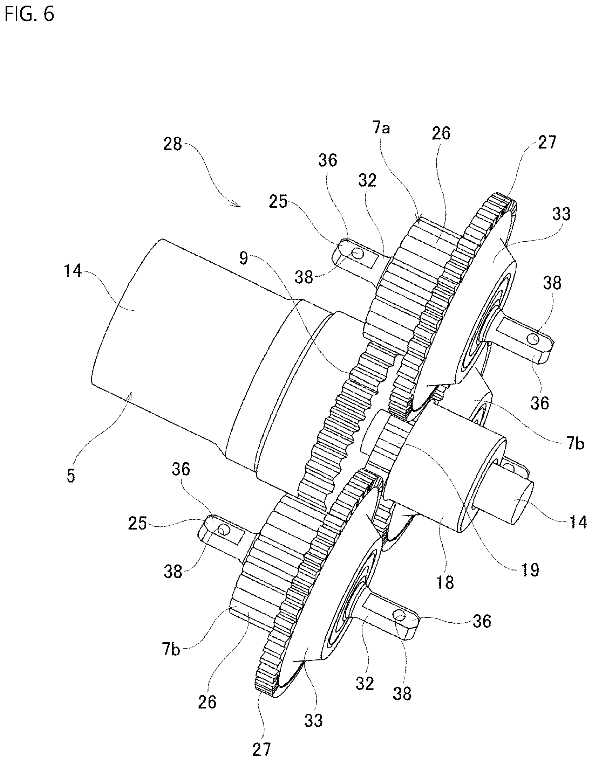

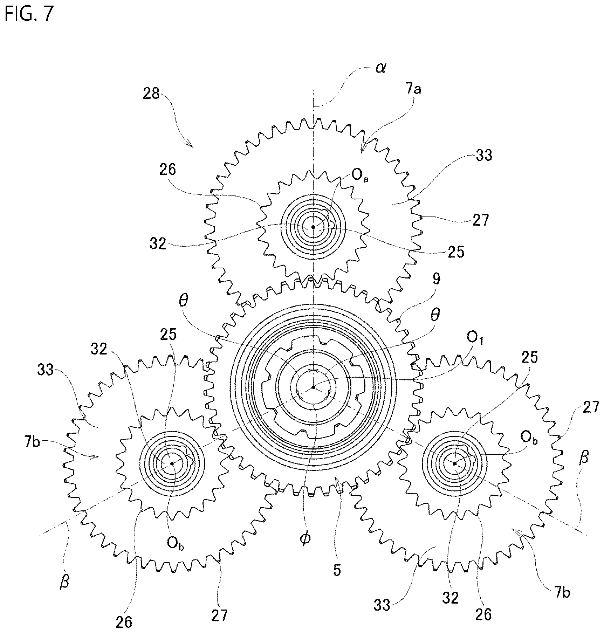

FIGS. 1 to 7 illustrate a first example of an embodiment of the present invention. The steering system 1 of this example includes a steering device 2, a turning device 3, and a torque transmission mechanism 4.

### <Structure of the Steering Device 2>

The steering device 2 includes a steering shaft 5, a reaction force applying motor 6, three two-stage gears 7a and 7b, and a measuring device 8.

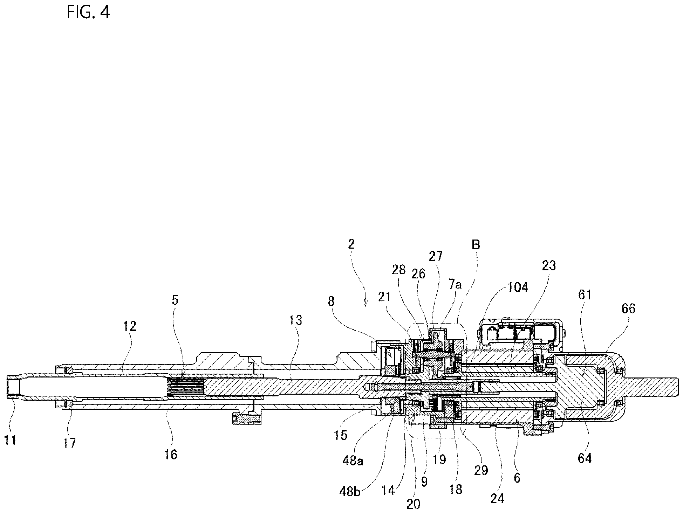

The steering shaft 5 has a shaft-side teeth portion 9 and a support portion 11 on which the steering wheel 10 is supported. The steering shaft 5 of this example includes an outer tube 12, an inner shaft 13, and a lower shaft 14. In other words, the steering shaft 5 is configured such that the front end portion (right end portion in FIG. 4) of the outer tube 12 and the rear end portion (left end portion in FIG. 4) of the inner shaft 13 are combined by spline engagement so as to be able to transmit torque, and so as to be able to expand and contract, and the front side portion of the inner shaft 13 and the lower shaft 14 are connected by a torsion bar 15 so as to be able to transmit torque.

In this example, the shaft-side teeth portion 9 is provided around the intermediate portion of the lower shaft 14. The shaft-side teeth portion 9 is arranged coaxially with the steering shaft 5 and rotates integrally with the steering shaft 5. The shaft-side teeth portion 9 has a specified pitch circle diameter and a specified number of teeth. The support portion 11 is configured by a male spline portion provided on the outer circumferential surface of the rear end portion of the outer tube 12. In other words, the steering wheel 10 is attached to the steering shaft 5 by engaging a female spline portion provided on the steering wheel 10 with the support portion 11. Note that the steering shaft 5 is rotatably supported via a bearing 17 on the inner diameter side of the steering column 16 supported by a vehicle body.

The reaction force applying motor 6 has an output shaft 18 arranged coaxially with the steering shaft 5 and a motor-side teeth portion 19 arranged at the tip end portion (rear end portion) of the output shaft 18.

In this example, the output shaft 18 is configured by a hollow shaft that is supported around a portion of the lower shaft 14 of the steering shaft 5 that exists further on the front side than the shaft-side teeth portion 9, and is supported so as to be able to freely rotate relative to the lower shaft 14. The output shaft 18 is rotatably supported by a pair of rolling bearings 22 with respect to the front-side housing element 21 of the housing 20, which will be described later. Moreover, a radial needle bearing 104 is arranged between the outer circumferential surface of the lower shaft 14 and the inner circumferential surface of the output shaft 18. The reaction force applying motor 6 is configured by externally fitting and fixing the rotor 23 around the intermediate portion in the axial direction of the output shaft 18 and internally fitting and fixing the stator 24 to the front-side housing element 21.

The motor-side teeth portion 19 is arranged coaxially with the output shaft 18, and rotates integrally with the output shaft 18. Moreover, the motor-side teeth portion 19 has a pitch circle diameter smaller than the pitch circle diameter of the shaft-side teeth portion 9, and the number of teeth is smaller than the number of teeth of the shaft-side teeth portion 9.

Each of the two-stage gears 7a, 7b has an intermediate shaft 25, a first teeth portion 26, and a second teeth portion 27. The intermediate shaft 25 is arranged outside the steering shaft 5 in the radial direction of the steering shaft 5 and parallel to the steering shaft 5. The first teeth portion 26 is arranged around a portion (rear side portion) on the steering shaft 5 side in the axial direction of the intermediate shaft 25 so as to be able to freely rotate about the intermediate shaft 25, and engages with the shaft-side teeth portion 9 of the steering shaft 5. The first teeth portion 26 has a specified pitch circle diameter and number of teeth. The second teeth portion 27 is arranged around a portion (front side portion) of the reaction force applying motor 6 side in the axial direction of the intermediate shaft 25 so as to rotate in synchronization with the first teeth portion 26, and engages with the motor-side teeth portion 19 of the reaction force applying motor 6. The second teeth portion 27 has a pitch circle diameter that is larger than the pitch circle diameter of the first teeth portion 26, and has a number of teeth that is larger than the number of teeth of the first teeth portion 26.

In this example, a reduction mechanism 28 for reducing and transmitting the motive power of the reaction force applying motor 6 to the steering shaft 5 is configured by the shaft-side teeth portion 9 of the steering shaft 5, the two-stage gears 7a, 7b having the first teeth portion 26 and the second teeth portion 27, and the motor-side teeth portion 19 of the reaction force applying motor 6. Note that the reduction ratio between the steering shaft 5 and the output shaft 18 of the reaction force applying motor 6 is preferably no less than 3 and no more than 6.

In this example, the reduction mechanism 28 is housed in the housing 20. The housing 20 is configured by coupling and fixing a front-side housing element 21 arranged in the front and a rear-side housing element 29 arranged in the rear by bolts 30. The reaction force applying motor 6 is housed in the front-side housing element 21, and the rear-side housing element 29 is supported and fixed to the front end portion of the steering column 16.

The steering device 2 of this example further includes a biasing mechanism 31 that elastically biases one two-stage gear 7a of the three two-stage gears 7a, 7b inward in the radial direction of the steering shaft 5.

In this example, the three two-stage gears 7a, 7b are installed around the steering shaft 5 and the output shaft 18 of the reaction force applying motor 6 at irregular intervals in the circumferential direction. More specifically, the angle θ between a virtual straight line α that is orthogonal to the central axis O₅ of the steering shaft 5 and the central axis Oₐ of the two-stage gear 7a that is biased by the biasing mechanism 31, a virtual straight line β that is orthogonal to the central axis O₅ of the steering shaft 5 and the central axis O_{b} of the two-stage gears 7b that are not biased by the biasing mechanism 31 is less than the angle ϕ between the virtual lines β (θ < ϕ). However, the three two-stage gears 7a, 7b may be installed around the steering shaft 5 and the output shaft 18 of the reaction force applying motor 6 at equal intervals in the circumferential direction. In a case where a plurality of two-stage gears is provided, the distance in the circumferential direction between the two-stage gears is determined according to the total number of the two-stage gears, the number of teeth of the first teeth portion, and the number of teeth of the second teeth portion.

In this example, each of the two-stage gears 7a, 7b includes a shaft member 32 of the intermediate shaft 25, a cylindrical member 33 having a cylindrical shape, and a pair of rolling bearings 34a. 34b. The shaft member 32 has a large-diameter portion 35 in an intermediate portion in the axial direction and a pair of flat plate portions 36 protruding in the axial direction from both ends in the axial direction of the large-diameter portion 35. The cylindrical member 33 includes a flange portion 37 that protrudes outward in the radial direction in an intermediate portion in the axial direction and has a rectangular cross-sectional shape, and has a first teeth portion 26 provided on the outer circumferential surface further on the steering shaft 5 side than the flange portion 37 in the axial direction, and a second teeth portion 27 provided on the outer circumferential surface of the flange portion 37.

Each of the two-stage gears 7a, 7b is configured so as to have rolling bearings 34a, 34b between both end portions in the axial direction of the outer circumferential surface of the large-diameter portion 35 of the shaft member 32 and both end portions in the axial direction of the inner circumferential surface of the cylindrical member 33, and the cylindrical member 33 is rotatably supported around the intermediate portion in the axial direction of the shaft member 32. In the illustrated example, deep groove ball bearings are used as the rolling bearings 34a, 34b, but cylindrical roller bearings, tapered roller bearings, slide bearings and the like may also be used. Moreover, the cylindrical member 33 is integrally formed as a whole; however, may be configured by joining a first member having the first teeth portion 26 and a second member having the second teeth portion 27 such that relative rotation is not possible.

Of the two-stage gears 7a,7b, in the one two-stage gear 7a biased by the biasing mechanism 31, both ends (flat plate portions 36) in the axial direction of the intermediate shaft 25 are supported inside the housing 20 so as to be able to displace in the radial direction steering shaft 5.

In this example, the two-stage gear 7a has through holes 38 that penetrate each of the flat plate portions 36 of the shaft member 32 in the radial direction.

Further, the housing 20 has a pair of guide holes 39, a pair of screw holes 40, and a pair of circular holes 41. The pair of guide holes 39 are provided in portions of the rear-side surface of the front-side housing element 21 and the front-side surface of the rear-side housing element 29 that oppose each other so that guide holes 39 are aligned with each other, or in other words, are provided in positions where the locations in the radial direction and circumferential direction of the steering shaft 5 coincide. The guide hole 39 has an elliptical cross-sectional shape having a major axis in a direction corresponding to the radial direction of the steering shaft 5 and a minor axis in a direction orthogonal to the radial direction of the steering shaft 5 (the major axis direction) and the axial direction of the shaft member 32. The pair of screw holes 40 is provided so the outer circumferential surfaces of the front-side housing element 21 and rear-side housing element 29 communicate with the inner circumferential surface of the guide hole 39 in the radial direction of the steering shaft 5. The pair of circular holes 41 is provided so the inner circumferential surfaces of the front-side housing element 21 and rear-side housing element 29 communicate with the inner circumferential surface of the guide hole 39 in the radial direction of the steering shaft 5.

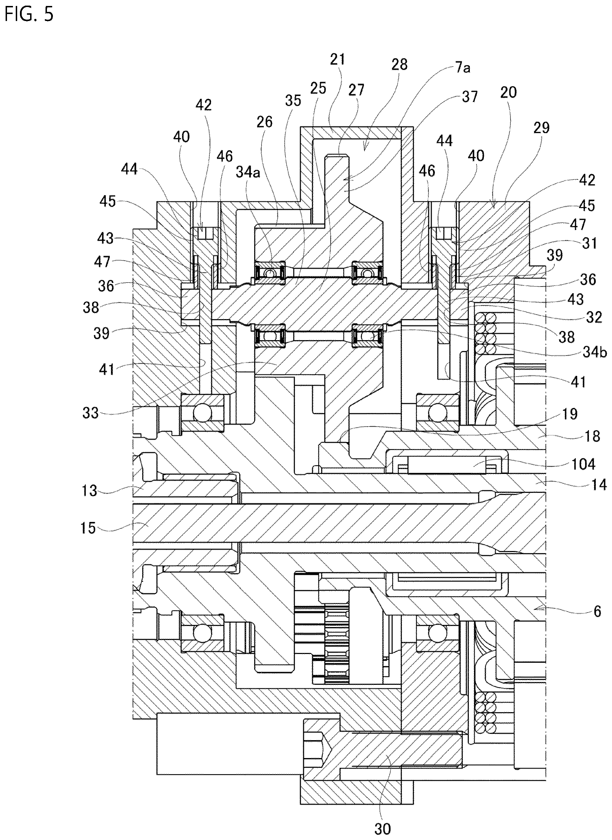

The two-stage gear 7a is such that the flat plate portions 36 are supported inside the guide holes 39 by using support members 42 so as to be able to displace in the radial direction of the steering shaft 5. The support member 42 includes a shaft portion 43, a head portion 44 provided at the base end portion (upper end portion in FIG. 5) of the shaft portion 43, and a male screw portion 45 provided on the outer circumferential surface of the head portion 44. The support member 42 is such that the tip end portion of the shaft portion 43 is inserted into the circular hole 41, the intermediate portion of the shaft portion 43 is inserted through the through hole 38 of the flat plate portion 36 that is inserted inside the guide hole 39 so that there is no looseness and so that relative displacement in the axial direction of the support member 42 is possible, and the male screw portion 45 is screwed into the screw hole 40. As a result, the two-stage gear 7a may be supported so as to be able to displace in the radial direction of the steering shaft 5.

In this example, the elastic member 47 is held between the seat surface 46 of the head portion 44 of the support member 42 and the flat surface of the flat plate portions 36 of the two-stage gear 7a facing the seat surface 46, and the elasticity of the elastic member 47 elastically presses the two-stage gear 7a inward in the radial direction of the steering shaft 5. As a result, the first teeth portion 26 is elastically pressed toward the shaft-side teeth portion 9, and the second teeth portion 27 is elastically pressed toward the motor-side teeth portion 19. In other words, in this example, the elastic member 47 constitutes the biasing mechanism 31. The elastic member 47 is configured, for example, by a torsion coil spring, a rubber having a cylindrical shape, or the like.

Of the two-stage gears 7a, 7b, the two two-stage gears 7b that are not pressed by the biasing mechanism 31 are such that both ends in the axial direction of the intermediate shaft 25 are supported inside the housing 20. More specifically, in this example, rectangular holes are provided in portions where the rear side surface of the front-side housing element 21 and the front side surface of the rear-side housing element 29 are aligned with each other, and the flat plate portions 36 of the two-stage gear 7b are inserted or press fitted into the rectangular holes so that there is no looseness.

The measuring device 8 is a device for measuring the amount of operation of the steering wheel 10 by the driver, or in other words, for measuring the rotational speed, the direction of rotation, the rotation angle, the rotation torque, and the like of the steering shaft 5.

In this example, the measuring device 8 includes encoders 48a, 48b supported and fixed to the inner shaft 13 and the lower shaft 14, respectively, and sensors (not illustrated) having a detection unit facing each of the detected surfaces of the encoders 48a, 48b. The measuring device 8 measures the rotational speed, the direction of rotation, the rotation angle, and the like of the steering shaft 5 based on the output signal of the sensors. Moreover, when the driver operates the steering wheel 10, the inner shaft 13 and the lower shaft 14 of the steering shaft 5 are relatively displaced in the direction of rotation while the torsion bar 15 is elastically deformed in the twisting direction. When the torsion bar 15 is elastically deformed in the torsional direction, a phase difference is generated between the output signals of the sensors. The measuring device 8, based on the phase difference between the output signals of the sensors, measures the rotational torque of the steering shaft 5, or in other words, the steering torque inputted from the steering wheel 10 to the steering shaft 5.

### <Structure of the Turning Device 3>

The turning device 3 includes a steering gear unit 49 and a turning motor 50.

The steering gear unit 49 includes an input shaft 51 and a linear motion shaft 52 that is supported substantially horizontally in the width direction of the vehicle and displaces in the axial direction of the linear motion shaft 52 (width direction of the vehicle) as the input shaft 51 rotates. In this example, the input shaft 51 is configured by a pinion shaft having pinion teeth 53 at the tip end portion, and the linear motion shaft 52 is configured by a rack shaft having rack teeth 54 that engage with the pinion teeth 53. In other words, the steering gear unit 49 is configured by a rack and pinion type steering gear unit.

The base end portions of the tie rods 55 are connected to the end portions on both sides in the axial direction of the linear motion shaft 52, and the base end portions of the knuckle arms 56 are connected to the respective tip end portions of the tie rods 55. The steered wheels 57 are rotatably supported by hub unit bearings at the tip end portions of the knuckle arms 56. Note that the steered wheels 57 are usually the front wheels in an automobile. However, in special vehicles such as forklifts, and the like, the steered wheels may be the rear wheels.

The turning motor 50 rotationally drives the input shaft 51 of the steering gear unit 49 via a speed reducer 58. In the speed reducer 58 of this example, a worm 59 that is provided at the tip end portion of the output shaft of the turning motor 50 engages with a worm wheel 60 that is provided at an intermediate portion of the input shaft 51. In other words, the speed reducer 58 of this example is configured by a worm speed reducer.

### <Structure of the Torque Transmission Mechanism 4>

The torque transmission mechanism 4 mechanically connects the lower shaft 14 of the steering shaft 5 and the input shaft 51 of the steering gear unit 49 so as to be able to switch between a transmitting mode for mechanically transmitting torque between the lower shaft 14 and the input shaft 51 and a non-transmitting mode. For this purpose, the torque transmission mechanism 4 includes a clutch 61 arranged between the lower shaft 14 and the input shaft 51 in the direction of torque transmission between the lower shaft 14 and the input shaft 51. The torque transmission mechanism 4 of this example further includes an intermediate shaft 63 of which the front end portion is connected to the base end portion (rear end portion) of the input shaft 51 so that torque may be transmitted by a universal joint 62.

The clutch 61 of this example includes an input member 64 of which the rear end portion is connected to the front end portion of the lower shaft 14 by spline engagement so as to be able to transmit torque, and an output member 66 of which the front end portion is connected to the rear end portion of the intermediate shaft 63 by a universal joint 65 so as to be able to transmit torque. In this example, the clutch 61 is configured by an electromagnetic clutch. In other words, when power is supplied to the clutch 61, the clutch 61 is disengaged and the rotational torque of the input member 64 is not transmitted to the output member 66; however, when power cannot be supplied to the clutch 61, the clutch 61 is engaged and the rotational torque of the input member 64 is transmitted to the output member 66.

As the intermediate shaft 63, a shaft may be used in which, for example, an upper shaft and a lower shaft are combined by a ball spline such that relative displacement in the axial direction with respect to each other is possible, and so that torque may be transmitted.

### <Operation of the Steering System 1>

Normally, when power is supplied to the steering system 1 without any trouble, the steering system 1 switches to a mode in which the clutch 61 of the torque transmission mechanism 4 is disengaged and the rotational torque of the input member 64 is not transmitted to the output member 66. In this mode, when the driver operates the steering wheel 10, the amount of operation of the steering wheel 10 is measured by the measuring device 8 of the steering device 2. The operating amount of the steering wheel 10 that is measured by the measuring device 8 is transmitted to a controller (ECU) 67. The controller 67 calculates the steering angle applied to the steered wheels 57 based on the amount of operation of the steering wheel 10, and rotationally drives the turning motor 50 of the turning device 3 based on the calculated value. The rotational torque of the turning motor 50 is transmitted to the input shaft 51 of the steering gear unit 49 via the speed reducer 58, and the linear motion shaft 52 is displaced in the axial direction as the input shaft 51 rotates. A desired steering angle is given to the steered wheels 57 by pushing and pulling the tie rods 55 by the axial displacement of the linear motion shaft 52. On the other hand, when the steering wheel 10 is operated, the output shaft 18 of the reaction force applying motor 6 of the steering device 2 is rotationally driven. The rotational torque of the output shaft 18 is increased by the reduction mechanism 28 and transmitted to the steering shaft 5, and an operating reaction force is applied to the steering wheel 10 via the steering shaft 5. In other words, normally, when power is supplied to the steering system 1 without any trouble, the steering device 2 and the turning device 3 are electrically connected. In such a mode in which the rotational torque of the input member 64 is not transmitted to the output member 66, the steering angle of the steered wheels 57 with respect to the operating amount of the steering wheel 10 can be arbitrarily adjusted according to the traveling speed of the vehicle and the like. Note that the magnitude of the operating reaction force applied to the steering wheel 10 is determined according to the operating amount of the steering wheel 10 measured by the measuring device 8.

On the other hand, when a failure such as disconnection of a power cable or the like occurs and power cannot be supplied to the steering system 1, the mode is switched to a state in which the clutch 61 of the torque transmission mechanism 4 is engaged and the rotational torque of the input member 64 is transmitted to the output member 66. When the driver operates the steering wheel 10 in this state, the rotation of the steering wheel 10 is transmitted from the steering shaft 5 to the input shaft 51 of the steering gear unit 49 via the torque transmission mechanism 4, and the linear motion shaft 52 displaces in the axial direction as the input shaft 51 rotates. A desired steering angle is given to the steered wheels 57 by pushing and pulling the tie rods 55 by the axial displacement of the linear motion shaft 52. In other words, in an emergency when power cannot be supplied to the steering system 1, the steering device 2 and the turning device 3 are mechanically connected by the torque transmission mechanism 4.

The steering system 1 of this example may be configured to be compact, and even in a case where the power supply to the steering device 2 and the turning device 3 is stopped, it is possible to steer the vehicle.

In other words, in the steering system 1 of this example, the torque transmission mechanism 4 that includes the clutch 61 mechanically connects the lower shaft 14 of the steering shaft 5 and the input shaft 51 of the steering gear unit 49 so that it is possible to switch between a transmitting mode of transmitting torque between the lower shaft 14 and the input shaft 51 and non-transmitting mode. When power cannot be supplied to the steering system 1, the clutch 61 is engaged and the rotation of the steering wheel 10 is transmitted from the steering shaft 5 to the input shaft 51 of the steering gear unit 49 via the torque transmission mechanism 4. As a result, even in a case where the power supply to the steering system 1 is stopped, it is possible to perform steering of the vehicle.

Moreover, in the steering device 2 of the steering system 1 of this example, the steering shaft 5 and the output shaft 18 of the reaction force applying motor 6 which is the source of the operating reaction force applied to the steering wheel 10 are arranged coaxially. Therefore, the steering device 2 of this example can be configured to be smaller than the structure in which a pair of electric motors are arranged around the steering shaft as in the structure described in JP 2009-073334A.

In this example, the motive power of the reaction force applying motor 6 is reduced by the reduction mechanism 28 including the motor-side teeth portion 19, the two-stage gears 7a, 7b, and the shaft-side teeth portion 9 and applied to the steering shaft 5. Therefore, in the steering device 2 of this example, the reaction force applying motor 6 may be made more compact than in a direct drive structure that directly applies the motive power of the electric motor to the steering shaft as in the structure described in JP 2007-055453A, and a general-purpose product may be used as the reaction force applying motor 6.

The steering device 2 of this example has three two-stage gears 7a, 7b that transmit motive power between the motor-side teeth portion 19 of the output shaft 18 of the reaction force applying motor 6 and the shaft-side teeth portion 9 of the steering shaft 5. In other words, the motive power of the reaction force applying motor 6 may be distributed to the three two-stage gears 7a, 7b and transmitted to the steering shaft 5. Therefore, the torque transmitted by each of the two-stage gears 7a, 7b may be kept small as compared with a structure provided with only one two-stage gear, and the outer diameter dimensions of the two-stage gears 7a, 7b may be suppressed accordingly (the teeth portions of the two-stage gears 7a, 7b may be made small). Therefore, the speed reduction mechanism 28 that reduces the motive power of the reaction force applying motor 6 and transmits the motive power to the steering shaft 5 may be made compact as compared with a structure provided with only one two-stage gear.

Furthermore, in this example, one two-stage gear 7a of the two-stage gears 7a, 7b is elastically biased inward in the radial direction of the steering shaft 5 by the biasing mechanism 31. As a result, backlash in the engaging portion between the first teeth portion 26 of the two-stage gear 7a and the shaft-side teeth portion 9 of the steering shaft 5, and in the engaging portion between the second teeth portion 27 of the two-stage gear 7a and the motor-side teeth portion 19 of the reaction force applying motor 6 is suppressed. Therefore, it is possible to prevent noise of striking teeth from being generated at the engaging portions when the steering shaft 5 starts to rotate or when the rotation direction of the steering shaft 5 is changed.

Note that in this example, when the two-stage gear 7a is pressed by the biasing mechanism 31, the two-stage gear 7a presses the steering shaft 5 and the output shaft 18 of the reaction force applying motor 6 toward the intermediate portion in the circumferential direction of the two two-stage gears 7b that are not pressed by the biasing mechanism 31. As a result, it is possible to suppress backlash in the engaging portion between the first teeth portions 26 of the two-stage gears 7b and the shaft-side teeth portion 9 of the steering shaft 5, and the engaging portion between the second teeth portions 27 of the two-stage gears 7b and the motor-side teeth portion 19 of the reaction force applying motor 6.

Note that the steering device 2 of this example includes three two-stage gears 7a, 7b, but the steering device of the steering system of the present invention may also be configured to include only one two-stage gear depending on the magnitude of power transmitted between the electric motor and the steering shaft. Alternatively, the reaction force applying device of the steering wheel of the present invention may be configured to include two or four or more two-stage gears.

Moreover, the steering device 2 of this example includes a biasing mechanism 31 for only one two-stage gear 7a of the three two-stage gears 7a, 7b, and elastically presses only that two-stage gear 7a inward in the radial direction of the steering shaft 5. From the aspect of preventing the generation of noise of striking teeth at the engaging portions when starting to rotate the steering shaft 5 or when changing the rotation direction of the steering shaft 5, it is sufficient to provide a biasing mechanism 31 only for one two-stage gear 7a as in this example. However, in a case where a plurality of two-stage gears is provided, it is also possible to provide a biasing mechanism that elastically urges two or more or all of the two-stage gears inward in the radial direction of the steering shaft.

Note that the steering system of the present invention may be configured so that by a switching operation by the driver, it is possible to switch between a transmitting mode of mechanically transmitting torque between the steering shaft and the input shaft of the steering gear unit, and a non-transmitting mode.

### [Second Example]

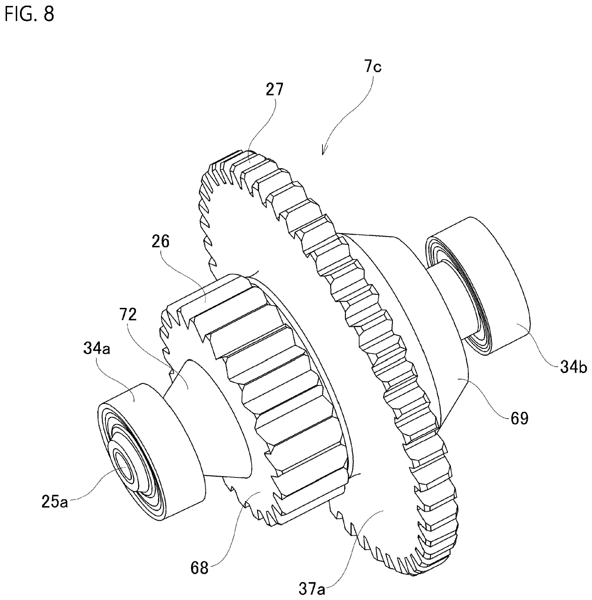

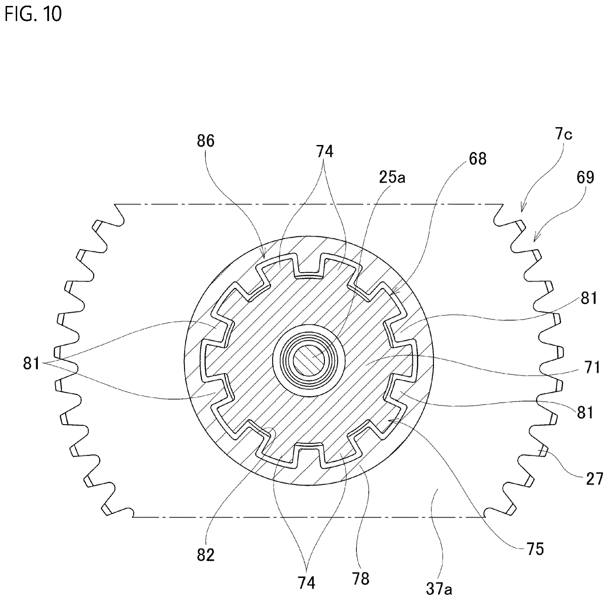

FIGS. 8 to 10 illustrate a second example of an embodiment of the present invention. In this example, the structure for suppressing backlash existing in the engaging portions and preventing the generation of teeth striking noise when the steering shaft 5 starts to rotate or when the rotation direction of the steering shaft 5 (see FIGS. 1 to 4) is changed differs from the structure of the biasing mechanism 31 according to the first example.

Of a plurality of two-stage gears 7c, a two-stage gear 7c having a structure for preventing the generation of teeth striking noise is configured by connecting a first member 68 and a second member 69 so as to be able to rotate relative to each other by an intermediate shaft 25a that is a torsion bar.

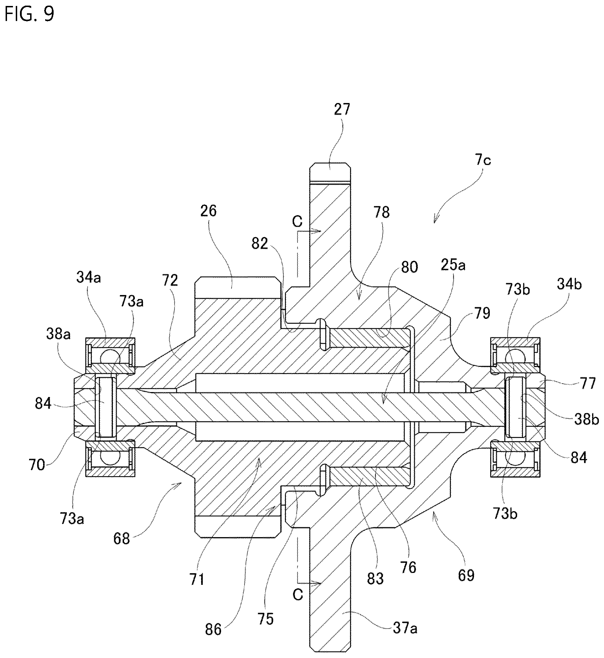

The first member 68 has a stepped cylindrical shape in which a first small-diameter cylindrical portion 70 on the steering shaft 5 side (rear side, left side in FIGS. 8 and 9) and a first large-diameter cylindrical portion 71 on the reaction force applying motor 6 side (front side, right side in FIGS. 8 and 9) are connected by a tapered cylindrical portion 72 having an outer diameter dimension that becomes smaller toward the steering shaft 5 side.

The first small-diameter cylindrical portion 70 has circular holes 73a that are coaxial with each other at two positions on opposite sides in the radial direction.

The first large-diameter cylindrical portion 71 has a first teeth portion 26 on the outer circumferential surface of the rear side portion that engages with the shaft-side teeth portion 9 of the steering shaft 5, and male stopper portion 75 on the outer circumferential surface of the intermediate portion with inner-diameter-side convex portions 74 arranged at equal intervals in the circumferential direction that protrude outward in the radial direction. Furthermore, the first large-diameter cylindrical portion 71 includes an inner diameter-side cylindrical surface portion 76 having an outer diameter dimension that does not change in the axial direction on the outer circumferential surface of the front side portion. The inner diameter-side cylindrical surface portion 76 has an outer diameter that is smaller than the dedendum circle diameter of the male stopper portion 75, and the male stopper portion 75 has an addendum diameter that is smaller than the dedendum circle diameter of the shaft-side teeth portion 9. Furthermore, the first large-diameter cylindrical portion 71 has a single cylindrical shaped inner circumferential surface the inner diameter of which does not change in the axial direction, except for the front end portion.

The second member 69 is configured by connecting the second small-diameter cylindrical portion 77 on the reaction force applying motor 6 side and the second large-diameter cylindrical portion 78 on the steering shaft 5 side by a side plate portion 79 having a substantially circular ring shape.

The second small-diameter cylindrical portion 77 has circular holes 73b that are coaxial with each other at two positions on opposite sides in the radial direction.

The second large-diameter cylindrical portion 78, in the intermediate portion in the axial direction, has a flange portion 37a protruding outward in the radial direction, and, on the outer circumferential surface of the flange portion 37a, has a second teeth portion 27 that engages with the motor-side teeth portion 19 of the reaction force applying motor 6. Moreover, the second large-diameter cylindrical portion 78, on the inner circumferential surface of the front side portion, has an outer-diameter-side cylindrical surface portion 80 having an inner diameter dimension that does not change in the axial direction, and, on the inner circumferential surface of the rear side portion, has a female stopper portion 82 formed by arranging outer-diameter-side convex portions 81 protruding inward in the radial direction. The outer-diameter-side cylindrical surface portion 80 has an inner diameter smaller than the addendum circle diameter of the female stopper portion 82.

The intermediate shaft 25a is a torsion bar that is easily twisted and deformed, and at both ends in the axial direction, has through holes 38a that penetrate in the radial direction.

The first member 68 and the second member 69 are combined by externally fitting the outer-diameter-side cylindrical surface portion 80 with the inner-diameter-side cylindrical surface portion 76 via a collar 83 having a cylindrical shape so as to be able to rotate relative to each other, and the inner-diameter-side convex portion 74 of the male stopper portion 75 and the outer-diameter-side convex portion 81 of the female stopper portion 82 are alternately arranged in the circumferential direction so that a little relative displacement is possible. Note that the collar 83 is made of a material having a small sliding resistance with respect to the inner diameter-side cylindrical surface portion 76 and the outer-diameter-side cylindrical surface portion 80. Alternatively, instead of the collar 83, a radial needle bearing may be arranged between the inner-diameter-side cylindrical surface portion 76 and the outer-diameter-side cylindrical surface portion 80. Moreover, in the combined state of the first member 68 and the second member 69, there is a gap between the circumferential direction side surfaces of the inner-diameter-side convex portions 74 of the male stopper portion 75, and the circumferential side surfaces of the outer-diameter-side convex portions 81 of the female stopper portion 82.

Both ends in the axial direction of the intermediate shaft 25a are inserted into the inner diameter side of the first small-diameter cylindrical portion 70 of the first member 68 and the inner diameter side of the second small-diameter cylindrical portion 77 of the second member 69, and coupling pins 84 are inserted or press fitted so as to span the through holes 38a and the circular holes 73a, 73b. As a result, the first member 68 and the second member 69 are coupled so as to be able to slightly rotate relative to each other.

In the two-stage gear 7c, in a state where torque is not transmitted by the two-stage gear 7c, the intermediate shaft 25a exhibits an elastic force in the twisting direction. In other words, in a state where torque is not transmitted by the two-stage gear 7c, elasticity in the twisting direction is imparted to the intermediate shaft 25a. More specifically, in this example, in the two-stage gear 7c, in a state in which the intermediate shaft 25a, which is a torsion bar, is elastically deformed in the twisting direction, the first teeth portion 26 is engaged with the shaft-side teeth portion 9, and the second teeth portion 27 is engaged with the motor-side teeth portion 19.

Therefore, the surfaces of the teeth of the shaft-side teeth portion 9 and the surfaces of the teeth of the first teeth portion26 come in elastic contact with each other, and the surfaces of the teeth of the motor-side teeth portion 19 and the surfaces of the teeth of the second teeth portion 27 come in elastic contact with each other. As a result, backlash at the engaging portions may be suppressed.

Moreover, in this example, by engaging the male stopper portion 75 of the first member 68 and the female stopper portion 82 of the second member 69 via a gap in the circumferential direction, the first member 68 and the second member 69 are prevented from excessively rotating relative to each other. In other words, in this example, the stopper mechanism 86 is configured such that the engaging portions between the male stopper portion 75 and the female stopper portion 82 prevent relative rotation between the first teeth portion 26 and the second teeth portion 27 greater than a specified angle. Such a stopper mechanism 86 prevents the intermediate shaft 25a, which is a torsion bar, from deforming excessively in the twisting direction.

Note that in addition to a structure in which the male stopper portion 75 and the female stopper portion 82 are engaged with each other as in this example, the stopper mechanism 86 may be configured, for example, by a structure in which the engagement between first convex portions arranged at two locations separated in the circumferential direction on the front-end surface of the first member and second convex members that are arranged between the first convex members in the circumferential direction on the rear-end surface of the second member prevents excessive relative rotation between the first member and the second member; and other known structures may also be used. The configuration and operational effect of other parts are the same as in the first example.

### [Third Example]

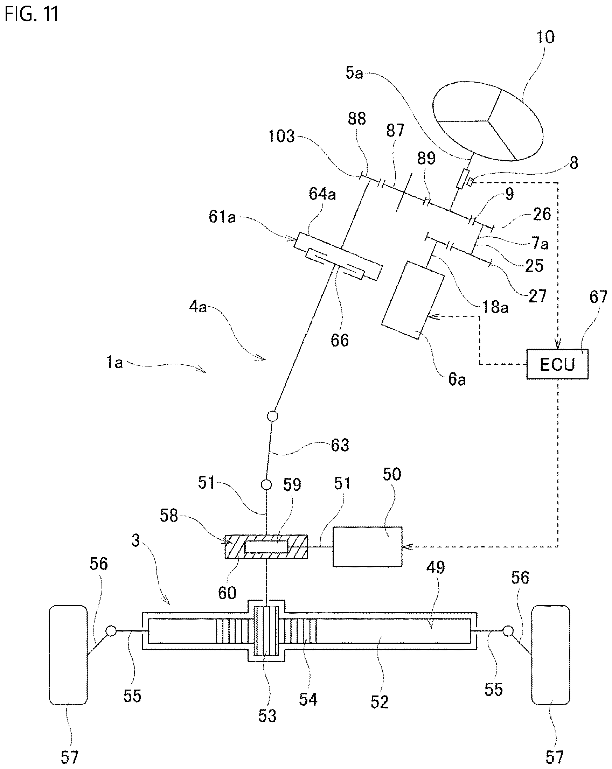

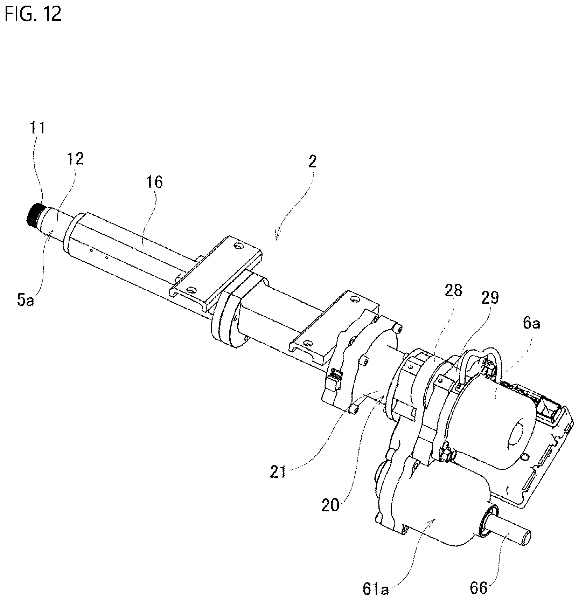

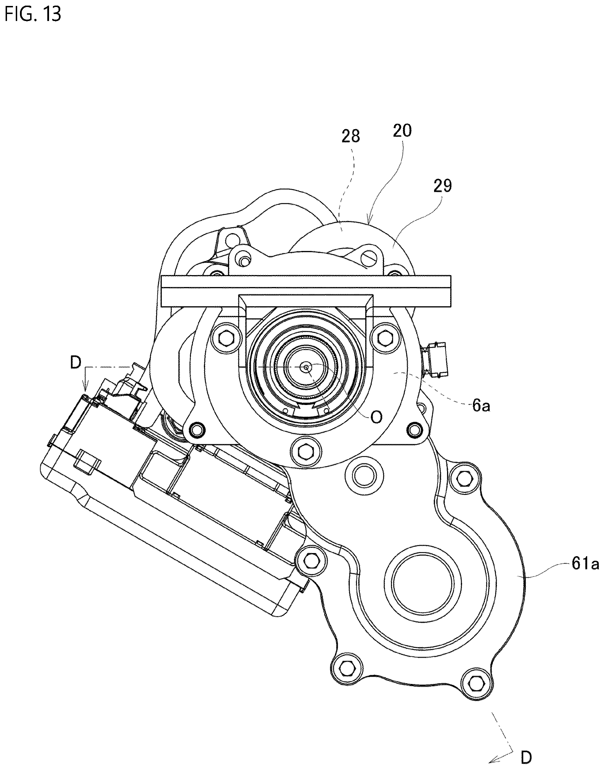

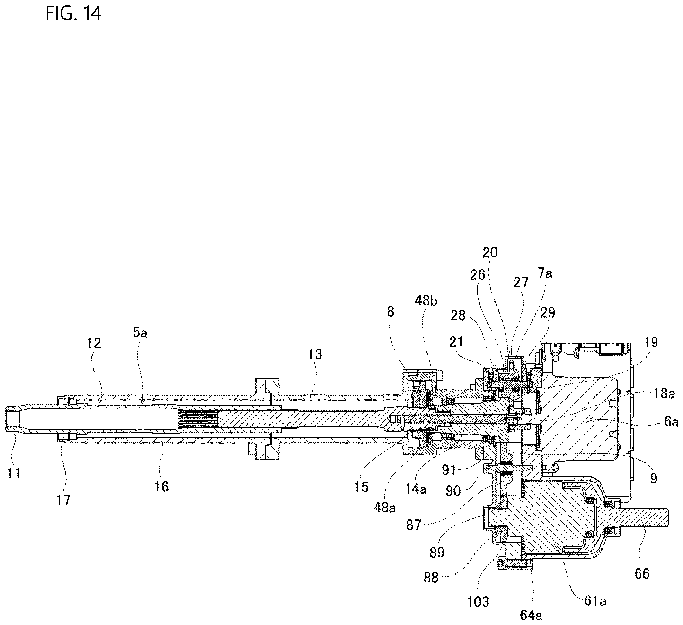

FIGS. 11 to 14 illustrate a third example of an embodiment of the present invention. In the steering system 1a of this example, the arrangement of the clutch 61a of the torque transmission mechanism 4a is different from that of the first example.

In this example, the output shaft 18a of the reaction force applying motor 6a includes a solid shaft, and the tip end portion of the output shaft 18a faces in the axial direction the tip end portion (front end portion) of the lower shaft 14a of the steering shaft 5a via a gap.

The torque transmission mechanism 4a of this example includes an intermediate gear 87 and a transmission gear 88. The steering system 1a of this example has a structure in which one two-stage gear 7b of the two-stage gears 7a, 7b of the reduction mechanism 28 according to the first example is replaced with the intermediate gear 87.

In other words, the first teeth portion 26 of the two-stage gear 7b where the biasing mechanism 31 is not provided is made to engage with a portion of the shaft-side teeth portion 9 that is deviated by a specified angle in a specified direction in the circumferential direction from the portion where the first teeth portion 26 of the two-stage gear 7a provided with the biasing mechanism 31 engages, and an intermediate teeth portion 89 existing over the entire outer circumferential surface of the intermediate gear 87 is made to engage with a portion of the shaft-side teeth portion 9 that is deviated in the circumferential direction by a specified angle in a direction opposite to the specified direction from the portion where the first teeth portion 26 of the two-stage gear 7a engages. The intermediate gear 87 includes a support shaft 90, both end portions in the axial direction of which are supported by and fixed to the housing 20a, and a ring-shaped gear body 91 that is rotatably supported by an intermediate portion in the axial direction of the support shaft 90, and has an intermediate teeth portion 89 over the entire circumference of the outer circumferential surface that engages with the shaft-side teeth portion 9.

The transmission gear 88, on the outer circumferential surface, has a transmission-teeth portion 103 that engages with the intermediate teeth portion 89 of the intermediate gear 87, and also has a central axis parallel to the central axis of the steering shaft 5a. The transmission teeth portion 103 has the same number of teeth as the number of teeth of the shaft-side teeth portion 9.

The torque transmission mechanism 4a further includes: an intermediate shaft 63, the front end portion of which is connected to the base end portion (rear end portion) of the input shaft 51 of the steering gear unit 49 by a universal joint 62 so as to be able to transmit torque; and an electromagnetic type clutch 61a.

In the clutch 61a of this example supports and fixes the transmission gear 88 to the rear end of the input member 64a, and connects the front end portion of the output member 66 to the rear end portion of the intermediate shaft 63 by a universal joint 65 so as to be able to transmit torque.

In the steering system 1a of this example, it is possible to keep the distance in the axial direction of the assembly formed by combining the steering device 2 and the clutch 61a shorter than that of the steering system 1 of the first example.

Moreover, in this example, the transmission gear 88 engages with the shaft-side teeth portion 9 via the intermediate gear 87 and has the same number of teeth as the shaft-side teeth portion 9. Therefore, the rotation direction and rotation speed of the steering shaft 5a and the rotation direction and rotation speed of the transmission gear 88 may be made the same as each other. The configuration and operational effect of other parts are the same as in the first example.

### [Fourth Example]

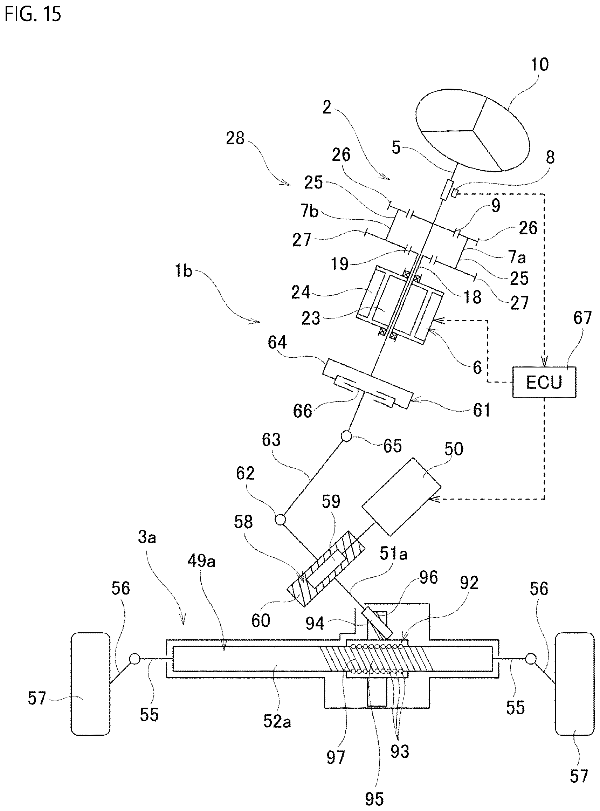

FIG. 15 illustrates a fourth example of an embodiment of the present invention. In the steering system 1b of this example, the steering gear unit 49a of the turning device 3a is configured of a ball screw type steering gear unit.

The steering gear unit 49a includes an input shaft 51a, a linear motion shaft 52a, a ball nut 92, and a plurality of balls 93.

The input shaft 51a, on the outer circumferential surface of the tip end portion, has a screw-shaped worm teeth 94.

The linear motion shaft 52a is composed of a ball screw shaft, and has a spiral inner-diameter-side ball screw groove 95 on at least the outer circumferential surface of the intermediate portion in the axial direction.

The ball nut 92, on the outer circumferential surface, has wheel teeth 96 that engage with the worm teeth 94 of the input shaft 51a, and on the inner circumferential surface, has a spiral shaped outer diameter side ball screw groove 97. Note, for example, that the wheel teeth 96 may be provided on the outer circumferential surface of a flange portion fixed so as to project outward in the radial direction. Alternatively, the gear having the wheel teeth 96 on the outer circumferential surface may be formed separately from the nut body having the outer diameter side ball screw groove 97 on the inner circumferential surface, and the ball nut 92 may be configured by externally fitting and fixing the gear to the nut body so as to integrally rotate.

The balls 93 are spirally arranged between the inner-diameter-side ball screw groove 95 of the linear motion shaft 52a and the outer-diameter-side ball screw groove 97 of the ball nut 92. Note that the ball nut 92 has a circulation mechanism (not illustrated) for circulating the balls 93 that move between the inner-diameter-side ball screw groove 95 and the outer-diameter-side ball screw groove 97.

When the input shaft 51a is rotationally driven by the turning motor 50 via the speed reducer 58, the ball nut 92 rotates around the linear motion shaft 52a due to the engagement between the worm teeth 94 and the wheel teeth 96. When the balls 93 move between the inner-diameter-side ball screw groove 95 and the outer-diameter-side ball screw groove 97 as the ball nut 92 rotates, the linear motion shaft 52a displaces in the width direction of the vehicle body. As a result, the pair of tie rods 55 are pushed and pulled, and a steering angle is applied to the steered wheels 57.

In this example, the steering gear unit 49a is composed of a ball screw type steering gear unit, so it is easy to improve quietness compared with the structure of the first example in which the steering gear unit 49 is configured by a rack and pinion type steering gear unit. In other words, in the rack and pinion type steering gear unit, abnormal noise due to backlash may be generated at the engaging portions between the pinion teeth and the rack teeth. In this example, the steering gear unit 49a is configured by a ball screw type steering gear unit, so backlash may be easily kept smaller than that of a rack and pinion type steering gear unit, and quietness may be easily improved.

Moreover, the steering gear unit 49a is configured by a ball screw type steering gear unit, so the displacement amount of the linear motion shaft 52a with respect to the rotation amount of the input shaft 51a is smaller than the displacement amount of the rack shaft with respect to the rotation amount of the input shaft (pinion shaft) of the rack and pinion type steering gear unit. In other words, the force that pushes and pulls the pair of tie rods 55 by the linear motion shaft 52a may be made larger than the force that pushes and pulls the pair of tie rods 55 by the rack shaft, and the output torque of the turning motor 50 may be kept small.

Note that, in this example, in order to transmit torque between the input shaft 51a and the ball nut 92, the worm teeth 94 of the input shaft 51a and the wheel teeth 96 of the ball nut 92 engage with each other. However, the configuration is not limited to this, and torque may be transmitted between the input shaft 51a and the ball nut 92 by bevel gears engaging with each other.

Moreover, the steering gear unit may be a sliding screw type steering gear unit that includes a nut having a female screw groove on the inner circumferential surface and a screw shaft having a male screw groove on the outer circumferential surface that engages with the female screw groove. The configuration and operational effect of other parts are the same as in the first example.

### [Fifth Example]

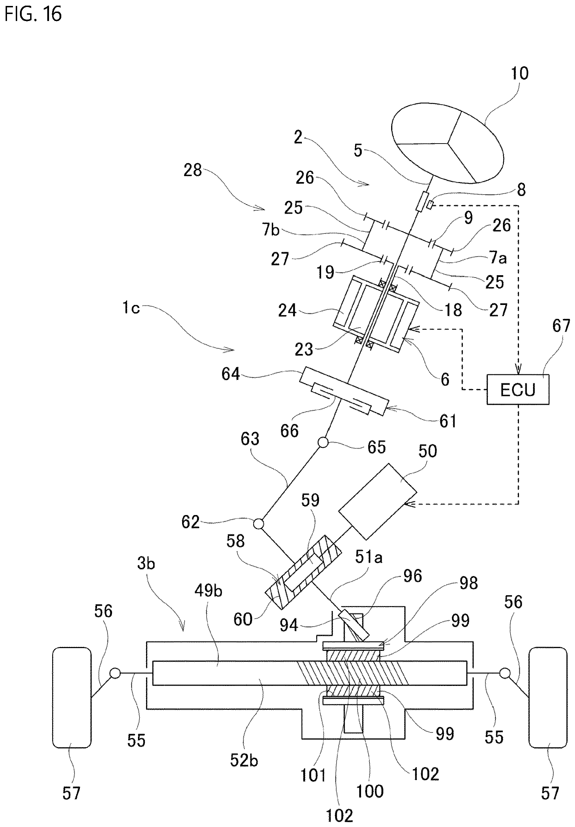

FIG. 16 illustrates a fifth example of an embodiment of the present invention. In the steering system 1c of this example, the steering gear unit 49b of the turning device 3b is configured by a planetary roller screw type steering gear unit.

The steering gear unit 49b of this example includes an input shaft 51a having worm teeth 94 on the outer circumferential surface of the tip end portion, a linear motion shaft 52b, a nut 98, and a plurality of planetary rollers 99.

The linear motion shaft 52b is composed of a screw shaft, and has a male screw groove 100 on at least the outer circumferential surface of the intermediate portion in the axial direction.

The nut 98, on the outer circumferential surface, has wheel teeth 96 that engage with the worm teeth 94 of the input shaft 51a, and on the inner circumferential surface, has a spiral shaped female screw groove 101.

Each of the planetary rollers 99 has a roller screw groove 102 on the outer circumferential surface. The planetary rollers 99 are respectively supported in a plurality of locations in the cylindrical space between the inner circumferential surface of the nut 98 and the outer circumferential surface of the linear motion shaft 52b, with the roller screw groove 102 engages with the male screw groove 100 and the female screw groove 101, such that the planetary rollers 99 revolve about the central axial of the linear motion shaft 52b and are capable of rotating about their own central axis that is parallel to the central axis of the linear motion shaft 52b.

When the input shaft 51a is rotationally driven by the turning motor 50 via the speed reducer 58, the nut 98 rotates around the linear motion shaft 52b due to the engagement between the worm teeth 94 and the wheel teeth 96. When the nut 98 rotates around the linear motion shaft 52b, the planetary rollers 99 revolve around the linear motion shaft 52b and rotate on their own central axis due to the engagement between the female screw groove 101 and the roller screw groove 102. When the planetary rollers 99 revolve around the linear motion shaft 52b and rotate on their own axis, the linear motion shaft 52b displaces in the width direction of the vehicle body due to the engagement between the roller screw groove 102 and the male screw groove 100. As a result, the pair of tie rods 55 are pushed and pulled, and a steering angle is applied to the steered wheels 57.

In this example, the steering gear unit 49b is configured of a planetary roller type steering gear unit. In other words, the rotational torque of the nut 98 that rotates with the rotation of the input shaft 51a is transmitted to the linear motion shaft 52b by the plurality of planetary rollers 99. In short, the transmission path of the rotational torque from the nut 98 to the linear motion shaft 52b may be dispersed in a plurality of ways, so the durability of the steering gear unit 49b may be easily ensured. The configuration and operational effect of other parts are the same as in the first example and fourth example.

The structures of the first to fifth examples of the embodiments described above may be appropriately combined and implemented as long as there is no contradiction. For example, the two-stage gears 7a, 7b of the steering device 2a of the third example and the two-stage gears 7a, 7b of the steering devices 2 of the fourth and fifth examples may be changed to the two-stage gear 2c of the second example. Moreover, the steering gear unit 49 of the turning device 3 of the third example may be changed to the steering gear unit 49a of the fourth example or the steering gear unit 49b of the fifth example.

### [Reference Signs List]

- 1, 1a, 1b, 1c: Steering system
- 2: Steering device
- 3, 3a, 3b: Turning device
- 4, 4a: Torque transmission mechanism
- 5, 5a: Steering shaft
- 6, 6a: Reaction force applying motor
- 7a, 7b, 7c: Two-stage gear
- 8: Measuring device
- 9: Shaft-side teeth portion
- 10: Steering wheel
- 11: Support portion
- 12: Outer tube
- 13: Inner shaft
- 14, 14a: Lower shaft
- 15: Torsion bar
- 16: Steering column
- 17: Bearing
- 18, 18a: Output shaft
- 19: Motor-side teeth portion
- 20: Housing
- 21: Front-side housing element
- 22: Rolling bearing
- 23: Rotor
- 24: Stator
- 25, 25a: Intermediate shaft
- 26: First teeth portion
- 27: Second teeth portion
- 28: Reduction mechanism
- 29: Rear-side housing element
- 30: Bolt
- 31: Biasing mechanism
- 32: Shaft member
- 33: Cylindrical member
- 34a, 34b: Rolling bearing
- 35: Large-diameter portion
- 36: Flat plate portion
- 37, 37a: Flange portion
- 38, 38a: Through hole
- 39: Guide hole
- 40: Screw hole
- 41: Circular hole
- 42: Support member
- 43: Shaft portion
- 44: Head portion
- 45: Male screw portion
- 46: Seat surface
- 47: Elastic member
- 48a, 48b: Encoder
- 49, 49a, 49b: Steering gear unit
- 50: Turning motor
- 51, 51a: Input shaft
- 52, 52a, 52b: Linear motion shaft
- 53: Pinion teeth
- 54: Rack teeth
- 55: Tie rod
- 56: Knuckle arm
- 57: Steered wheels
- 58: Speed reducer
- 59: Worm
- 60: Worm wheel
- 61, 61a: Clutch
- 62: Universal joint
- 63: Intermediate shaft
- 64, 64a: Input member
- 65: Universal joint
- 66: Output member
- 67: Controller
- 68: First member
- 69: Second member
- 70: First small-diameter cylindrical portion
- 71: First large-diameter cylindrical portion
- 72: Tapered cylindrical portion
- 73a, 73b: Circular hole
- 74: Inner-diameter-side convex portion
- 75: Male stopper portion
- 76: Inner diameter-side cylindrical surface portion
- 77: Second small-diameter cylindrical portion
- 78: Second large-diameter cylindrical portion
- 79: Side plate portion
- 80: Outer-diameter-side cylindrical surface portion
- 81: Outer-diameter-side convex portion
- 82: Female stopper portion
- 83: Collar
- 84: Coupling pin
- 86: Stopper mechanism
- 87: Intermediate gear
- 88: Transmission gear
- 89: Intermediate teeth portion
- 90: Support shaft
- 91: Gear body
- 92: Ball nut
- 93: Ball
- 94: Worm teeth
- 95: Inner-diameter-side ball screw groove
- 96: Wheel teeth
- 97: Outer-diameter-side ball screw groove
- 98: Nut
- 99: Planetary roller
- 100: Male screw groove
- 101: Female screw groove
- 102: Roller screw groove
- 103: Transmission teeth portion
- 104: Radial needle bearing

## Claims

1. A steering system comprising:
a steering device including:
a steering shaft having a shaft-side teeth portion, and a support portion supporting a steering wheel;
a reaction force applying motor having an output shaft coaxially arranged with the steering shaft, and a motor-side teeth portion arranged at a tip end portion of the output shaft;
at least one two-stage gear having an intermediate shaft arranged parallel to the steering shaft, a first teeth portion arranged on the intermediate shaft and engaging with the shaft-side teeth portion, and a second teeth portion arranged on a portion of the intermediate shaft closer to the reaction force applying motor side than the first teeth portion and engaging with the motor-side teeth portion; and
a measuring device measuring an operation amount of the steering wheel;
a turning device including:
a steering gear unit having an input shaft, and a linear motion shaft displacing in its own axial direction as the input shaft rotates; and
a turning motor rotationally driving the input shaft based on an output signal from the measuring device directly or via a speed reducer; and
a torque transmission mechanism connecting the steering shaft and the input shaft so as to be able to switch between a transmitting mode of mechanically transmitting torque between the steering shaft and the input shaft, and a non-transmitting mode.

2. The steering system according to claim 1, wherein
the at least one two-stage gear is configured by a plurality of two-stage gears.

3. The steering system according to claim 1 or claim 2, wherein
the torque transmission mechanism, in a case where power supplied to at least one of the steering device and the turning device is stopped, switches to the transmitting mode of mechanically transmitting torque between the steering shaft and the input shaft, and in a case where power is supplied to both the steering device and the turning device, switches to the non-transmitting mode that does not mechanically transmit torque between the steering shaft and the input shaft.

4. The steering system according to any one of claims 1 to 3, wherein
the output shaft is configured by a hollow shaft supported around the steering shaft so as to be able to freely rotate relate to the steering shaft; and
the torque transmission mechanism further includes an intermediate shaft connected to the input shaft so as to be able to transmit torque, and a clutch arranged between the steering shaft and the intermediate shaft in a direction of mechanical transmission of torque between the steering shaft and the input shaft.

5. The steering system according to any one of claims 1 to 3, wherein
the torque transmission mechanism further includes an intermediate gear engaging with the shaft-side teeth portion, a transmission gear engaging with the intermediate gear, an intermediate shaft connected to the input shaft so as to be able to transmit torque, and a clutch arranged between the transmission gear and the intermediate shaft in a direction of mechanical transmission of torque between the steering shaft and the input shaft.

6. The steering system according to claim 5, wherein
the transmission gear has the same number of teeth as the shaft-side teeth portion.

7. The steering system according to any one of claims 1 to 6, wherein
a biasing mechanism pressing the at least one two-stage gear inward in the radial direction of the steering shaft is provided.

8. The steering system according to any one of claims 1 to 6, wherein
the intermediate shaft is configured by a torsion bar; and
in a state where torque is not transmitted by the at least one two-stage gear, the intermediate shaft exerts an elastic force to the intermediate shaft in a twisting direction thereof.

9. The steering system according to claim 8, wherein
the at least one two-stage gear has a stopper mechanism for preventing the first teeth portion and the second teeth portion from rotating relative to each other by a specified angle or more.

10. The steering system according to any one of claims 1 to 9, wherein
the input shaft is configured by a pinion shaft having pinion teeth; and
the linear motion shaft is configured by a rack shaft having rack teeth engaging with the pinion teeth.

11. The steering system according to any one of claims 1 to 9, wherein
the linear motion shaft is configured by a ball screw shaft having an inner-diameter-side ball screw groove on an outer circumferential surface thereof; and
the steering gear unit includes a ball nut rotating as the input shaft rotates and having an outer-diameter-side ball screw groove on an inner circumferential surface thereof, and a plurality of balls arranged between the inner-diameter-side ball screw groove and the outer-diameter-side-ball screw groove.

12. The steering system according to any one of claims 1 to 9, wherein
the linear motion shaft is configured by a screw shaft having a spiral shaped male screw groove on an outer circumferential surface thereof; and
the steering gear unit includes a nut rotating as the input shaft rotates and having a spiral shaped female screw groove on an inner circumferential surface thereof; and a plurality of planetary rollers arranged so as to be able to freely revolve about a central axis of the linear motion shaft and to be able to freely rotate about its own central axis arranged parallel to the central axis of the linear motion shaft, each planetary roller having a roller screw groove on an outer circumferential surface thereof engaging with the male screw groove and the female screw groove.
